(19) **Europäisches Patentamt European Patent Office Office européen des brevets**

(11) **EP 4 654 731 A1**

(12) **EUROPEAN PATENT APPLICATION**
published in accordance with Art. 153(4) EPC

(43) Date of publication:
26.11.2025 Bulletin 2025/48

(21) Application number: 24752915.9

(22) Date of filing: 08.02.2024

(51) International Patent Classification (IPC):
*H04W 74/08* (2024.01)

(52) Cooperative Patent Classification (CPC):
H04L 1/1858; H04L 1/1685; H04L 1/1864;
H04L 5/00; H04W 74/00; H04W 74/08;
H04W 74/0833

(86) International application number:
PCT/CN2024/076846

(87) International publication number:
WO 2024/165061 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.02.2023 CN 202310152019

(71) Applicant: Huawei Technologies Co., Ltd.
Shenzhen, Guangdong 518129 (CN)

(72) Inventors:
• ZHAO, Feiran
  Shenzhen, Guangdong 518129 (CN)
• CHEN, Ying
  Shenzhen, Guangdong 518129 (CN)
• QIAO, Yunfei
  Shenzhen, Guangdong 518129 (CN)
• WANG, Yu
  Shenzhen, Guangdong 518129 (CN)
• WANG, Jun
  Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND COMMUNICATION APPARATUS**

(57) This application discloses a communication method and a communication apparatus. The method includes: A terminal device receives configuration information from a network device, where the configuration information indicates a first physical random access channel PRACH resource, the first PRACH resource indicates a request for repeated transmission of feedback information for a random access message Msg4, and the first PRACH resource is a part of a PRACH resource allocated by the network device; the terminal device sends a random access message Msg1 to the network device, where the random access message Msg1 is carried on the first PRACH resource; and the terminal device repeatedly transmits, to the network device, the feedback information for the random access message Msg4. The method helps increase a success rate of receiving the feedback information for the Msg4 by the network device.

FIG. 3

## Description

This application claims priority to Chinese Patent Application No. 202310152019.7, filed with the China National Intellectual Property Administration on February 10, 2023 and entitled "COMMUNICATION METHOD AND COMMUNICATION APPARATUS", which is incorporated herein by reference in its entirety.

## TECHNICAL FIELD

This application relates to the field of communication technologies, and in particular, to a communication method and a communication apparatus.

## BACKGROUND

Non-terrestrial networks (non-terrestrial networks, NTNs), an important part of 5th generation (5th generation, 5G) and future wireless communication networks, are networks or segments of networks that use a transmission device such as an airborne vehicle or a spaceborne vehicle as a relay node or a base station. Compared with conventional terrestrial networks, the non-terrestrial networks have communication characteristics of wide coverage, long distance, and high latency. In standards, to adapt to characteristics of high latency and high mobility, technologies such as hybrid automatic repeat request (hybrid automatic repeat request, HARQ) feedback, timing, and synchronization need to be enhanced.

Random access is a procedure from a terminal device sending a random access preamble to start attempting to access a network, up until a basic signaling connection is established between the terminal device and the network. The terminal device usually performs four-step random access. A last step of the four-step random access is as follows: A network device sends a random access message 4 (Msg4) to the terminal device that successfully accesses the network, and the terminal device receives and successfully decodes the Msg4, where the Msg4 indicates that the terminal device successfully accesses the network. The terminal device replies to the network device with a hybrid automatic repeat request feedback (HARQ-acknowledgement, HARQ-ACK) for the Msg4. The inventors have conducted research on how to properly design a HARQ-ACK that is of the terminal device for the Msg4 and that is applicable to communication scenarios such as the non-terrestrial networks.

## SUMMARY

This application provides a communication method and a communication apparatus, to help increase a success rate of a network device receiving feedback information for a Msg4 from a terminal device and enhance uplink coverage, for example, in an NTN scenario.

According to a first aspect, this application provides a communication method. The method includes: A terminal device receives configuration information from a network device, where the configuration information indicates a first physical random access channel PRACH resource, the first PRACH resource indicates a request for repeated transmission of feedback information for a random access message Msg4, and the first PRACH resource is a part of a PRACH resource allocated by the network device; the terminal device sends a random access message Msg1 to the network device, where the random access message Msg1 is carried on the first PRACH resource; and the terminal device repeatedly transmits, to the network device, the feedback information for the random access message Msg4.

Based on the method described in the first aspect, the terminal device may determine the first PRACH resource based on the configuration information sent by the network device, and send the random access message Msg1 carried on the first PRACH to indicate that the terminal device requests to send the feedback information for the Msg4 in a repeated transmission manner. The terminal device sends the feedback information for the Msg4 in the repeated transmission manner, so that a success rate of the network device receiving the feedback information for the Msg4 can be improved. If the terminal device sends the random access message Msg1 on another PRACH resource other than the first PRACH resource, it indicates that the terminal device does not request to send the feedback information for the Msg4 in the repeated transmission manner.

In a possible implementation, if one RO corresponds to one or more SSBs, preambles in one RO that correspond to one SSB include a first preamble group and a second preamble group, a preamble in the first preamble group corresponds to the first PRACH resource, a preamble in the second preamble group corresponds to a second PRACH resource, and the first PRACH resource is different from the second PRACH resource. Based on this grouping manner, the terminal device can select a PRACH resource (namely, the first PRACH resource) in a group associated with repeated transmission of the feedback information for the random access message Msg4, to implicitly indicate the request for repeated transmission of the feedback information for the random access message Msg4.

In a possible implementation, if one SSB corresponds to a plurality of ROs, the plurality of ROs include a first RO group and a second RO group, a preamble in the first RO group corresponds to the first PRACH resource, a preamble in the second RO group corresponds to a second PRACH resource, and the first PRACH resource is different from the second PRACH resource. Based on this grouping manner, the terminal device can select a PRACH resource (namely, the first PRACH resource) in a group associated with repeated transmission of the feedback information for the random access message Msg4, to implicitly indicate the request for repeated transmission of the feedback information for the random access message Msg4.

Optionally, a preamble that corresponds to the SSB and that is in the first RO group corresponds to the first PRACH resource, and a preamble that corresponds to the SSB and that is in the second RO group corresponds to the second PRACH resource.

In a possible implementation, the configuration information indicates a sequence number of an RO in the first RO group. Based on this implementation, the terminal device can determine the first PRACH resource based on a sequence number of the RO group. This can be implemented by reusing an existing signaling mechanism, with relatively small modifications to standards.

In a possible implementation, the configuration information indicates a sequence number of a preamble in the first preamble group. Based on this implementation, the terminal device can determine the first PRACH resource based on a sequence number of the preamble group. This can be implemented by reusing an existing signaling mechanism, with relatively small modifications to standards.

In a possible implementation, the configuration information is a system information block SIB1, a feature priority information element IE in the SIB1 includes a first parameter, and the first parameter indicates that the network device supports repeated transmission of the feedback information for the random access message Msg4.

In a possible implementation, the configuration information indicates that the first PRACH resource includes a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1. Based on this implementation, the terminal device further indicates, by using the PRACH resource on which the Msg1 is carried, the quantity of repeated transmissions that corresponds to repeated transmission of the feedback information for the random access message Msg4. This can be implemented by reusing the existing signaling mechanism, with relatively small modifications to the standards.

In a possible implementation, the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

In a possible implementation, the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

In a possible implementation, the configuration information indicates that the network device supports N repeated transmissions of the feedback information for the random access message Msg4, and the configuration information indicates that the network device supports M repeated transmissions of the feedback information for the random access message Msg4.

In a possible implementation, the first PRACH resource further indicates to repeatedly transmit a random access message Msg3. This implementation helps reduce further segmentation of the PRACH resource, thereby reducing a probability of collision occurring when the terminal device initiates random access.

According to a second aspect, this application provides a communication method. The method includes: A network device sends configuration information to a terminal device, where the configuration information indicates a first physical random access channel PRACH resource, the first PRACH resource indicates a request for repeated transmission of feedback information for a random access message Msg4, and the first PRACH resource is a part of a PRACH resource allocated to the terminal device; the network device receives a random access message Msg1 sent by the terminal device, where the random access message Msg1 is carried on the first PRACH resource; and the network device receives the feedback information that is for the random access message Msg4 and that is sent by the terminal device. For beneficial effects corresponding to the second aspect, refer to the beneficial effects corresponding to the first aspect. Details are not described herein again.

In a possible implementation, if one RO corresponds to one or more SSBs, preambles in one RO that correspond to one SSB include a first preamble group and a second preamble group, a preamble in the first preamble group corresponds to the first PRACH resource, a preamble in the second preamble group corresponds to a second PRACH resource, and the first PRACH resource is different from the second PRACH resource.

In a possible implementation, if one SSB corresponds to a plurality of ROs, the plurality of ROs include a first RO group and a second RO group, a preamble in the first RO group corresponds to the first PRACH resource, a preamble in the second RO group corresponds to a second PRACH resource, and the first PRACH resource is different from the second PRACH resource.

Optionally, a preamble that corresponds to the SSB and that is in the first RO group corresponds to the first PRACH resource, and a preamble that corresponds to the SSB and that is in the second RO group corresponds to the second PRACH resource.

In a possible implementation, the configuration information indicates a sequence number of an RO in the first RO group.

In a possible implementation, the configuration information indicates a sequence number of a preamble in the first preamble group.

In a possible implementation, the configuration information is a system information block SIB1, a feature priority information element IE in the SIB1 includes a first parameter, and the first parameter indicates that the network device supports repeated transmission of the feedback information for the random access message Msg4.

In a possible implementation, the configuration information indicates that the first PRACH resource includes a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1.

In a possible implementation, the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

In a possible implementation, the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

In a possible implementation, the configuration information indicates that the network device supports N repeated transmissions of the feedback information for the random access message Msg4, and the configuration information indicates that the network device supports M repeated transmissions of the feedback information for the random access message Msg4.

In a possible implementation, the first PRACH resource further indicates to repeatedly transmit a random access message Msg3.

According to a third aspect, this application provides a communication apparatus. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations and beneficial effects of the communication apparatus, refer to the method according to the first aspect and the beneficial effects thereof. Repeated parts are not described again.

According to a fourth aspect, this application provides a communication apparatus. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations and beneficial effects of the communication apparatus, refer to the method according to the second aspect and the beneficial effects thereof. Repeated parts are not described again.

According to a fifth aspect, this application provides a communication apparatus. The communication apparatus includes a processor, and when the processor invokes a computer program in a memory, the method according to the first aspect or the second aspect and the possible implementations of the method according to the first aspect or the second aspect are performed.

In a possible implementation, the communication apparatus further includes the memory. The memory and the processor are coupled to each other. Optionally, the memory and the processor are integrated together.

In a possible implementation, the communication apparatus further includes a transceiver. The transceiver is configured to send or receive data and/or signaling.

According to a sixth aspect, this application provides a communication apparatus. The communication apparatus includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to the first aspect or the second aspect and the possible implementations of the method according to the first aspect or the second aspect through a logic circuit or by executing code instructions.

According to a seventh aspect, this application provides a computer-readable storage medium. The storage medium stores a computer program or instructions, and when the computer program or instructions are executed by a communication apparatus, the method according to the first aspect or the second aspect and the possible implementations of the method according to the first aspect or the second aspect are implemented.

According to an eighth aspect, an embodiment of this application provides a computer program or a computer program product, including code or instructions. When the code or the instructions are run on a computer, the computer is enabled to perform the method according to the first aspect or the second aspect and the possible implementations of the method according to the first aspect or the second aspect.

## BRIEF DESCRIPTION OF DRAWINGS

FIG. 1 is a diagram of a communication system according to an embodiment of this application;
FIG. 2 is a schematic flowchart of four-step random access according to an embodiment of this application;
FIG. 3 is a schematic flowchart of a communication method according to this application;
FIG. 4 is a diagram of mapping between an SSB and an RO according to an embodiment of this application;
FIG. 5 is a diagram of another mapping between an SSB and an RO according to an embodiment of this application;
FIG. 6A is a diagram of association between an SSB and an RO according to an embodiment of this application;
FIG. 6B is a diagram of association between an SSB and an RO according to an embodiment of this application;
FIG. 7 is a diagram of another mapping between an SSB and an RO according to an embodiment of this application;
FIG. 8 is a diagram of RO resource allocation according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of a chip according to an embodiment of this application.

## DESCRIPTION OF EMBODIMENTS

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes a system architecture in embodiments of this application.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application may be applied to various communication systems such as a satellite communication system and a conventional mobile communication system. The satellite communication system may be integrated with the conventional mobile communication system (namely, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5 generation, 5G) system or a new radio (new radio, NR) system, a 6th generation (6th generation, 6G) system, or another future communication system. The technical solutions in embodiments of this application further support a communication system integrating a plurality of wireless technologies, for example, may further be applied to a system that integrates a terrestrial mobile communication network and a non-terrestrial network (non-terrestrial network, NTN), such as an uncrewed aerial vehicle communication system, a satellite communication system, or a high altitude platform (high altitude platform station, HAPS) communication system.

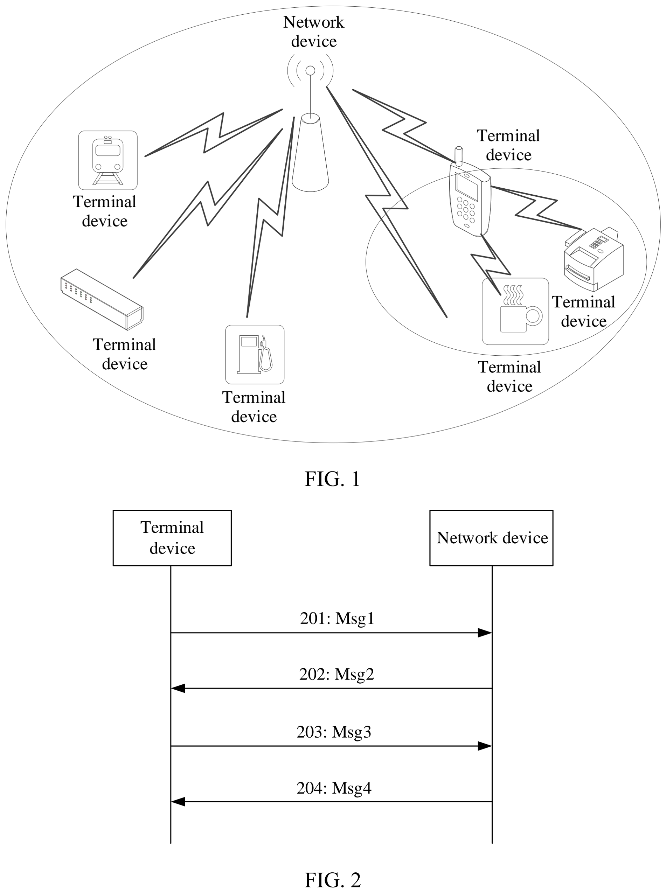

FIG. 1 shows an example of a communication system applicable to embodiments of this application. The communication system includes at least one network device and at least one terminal device. In FIG. 1, a network device and six terminal devices are used as an example. The six terminal devices may be a cellular phone, a smartphone, a portable computer, a handheld communication device, a handheld computing device, a satellite radio apparatus, a global positioning system, a PDA, and/or any other suitable device configured to perform communication in a wireless communication system, and all the terminal devices may be connected to the network device. All the six terminal devices can communicate with the network device. Certainly, the quantity of terminal devices and the quantity of network devices in FIG. 1 are merely an example, and there may alternatively be more or fewer terminal devices and more or fewer network devices.

The network device in this application has a wireless transceiver function, is configured to communicate with a terminal, and may be specifically a base station (base station), an evolved NodeB (evolved NodeB, eNodeB), a transmission-reception point (transmission-reception point, TRP), a next generation NodeB (next generation NodeB, gNB) in a 5G mobile communication system, a next generation base station in a 6th generation (6th generation, 6G) mobile communication system, an access network device or a module of an access network device in an open access network (open RAN, ORAN) system, a base station in a future mobile communication system, an access node in a Wi-Fi system, or the like. The network device may alternatively be a module or a unit that can implement some functions of a base station. For example, the network device may be a central unit (central unit, CU), a distributed unit (distributed unit, DU), a CU-control plane (control plane, CP), a CU-user plane (user plane, UP), a radio unit (radio unit, RU), or the like described below. In an ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. For example, the base station in embodiments of this application may include various forms of base stations, for example, a macro base station, a micro base station (also referred to as a small cell), a relay station, an access point, a next generation NodeB (gNodeB, gNB), a transmitting and receiving point (transmitting and receiving point, TRP), a transmitting point (transmitting point, TP), and a mobile switching center, or the base station may be a device that undertakes a wireless access function in device-to-device (Device-to-Device, D2D) communication, vehicle-to-everything (vehicle-to-everything, V2X) communication, machine-to-machine (machine-to-machine, M2M) communication, or internet of things (Internet of Things) communication, or the like. This is not specifically limited in embodiments of this application.

The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a communication device mounted on a high-altitude aircraft, a wearable device, an uncrewed aerial vehicle, a robot, a terminal in device-to-device (device-to-device, D2D) communication, a terminal in vehicle-to-everything (vehicle-to-everything, V2X) communication, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a terminal device in a future communication network, or the like. This is not limited in this application. In addition, in embodiments of this application, the terminal device may be an apparatus configured to implement a function of the terminal device, or may be an apparatus that can support the terminal device in implementing the function, for example, a chip system. The apparatus may be installed in the terminal device. For example, the terminal device may alternatively be a vehicle detector or a sensor in a gas station.

Communication between the network device and the terminal device complies with a specified protocol layer structure. A protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

To better understand embodiments of this application, the following first describes related concepts in embodiments of this application.

1. Random access (random access, RA)

The random access procedure is a procedure from a terminal device sending a random access preamble to start attempting to access a network, up until a basic signaling connection is established between the terminal device and the network. The terminal device may enter a connected (connected) mode from an idle (idle) mode or an inactive (inactive) mode through random access, establish various bearers with the network device, and obtain some necessary resources and parameter configurations, to communicate with a network device.

In a wireless communication system such as LTE or 5G NR, a terminal device may access a network through four-step random access, as shown in FIG. 2.

201: The terminal device sends a random access message Msg1 to a network device, where content of the Msg1 is a random access preamble (random access preamble). The terminal device sends the random access preamble to the network device to perform a random access request, and the network device estimates a transmission delay between the network device and the terminal device by using the random access preamble sent by the terminal device, so that the network device calibrates uplink timing (uplink timing).

202: After receiving the Msg1, the network device sends a random access message Msg2 to the terminal device. The Msg2 may include a timing offset (time alignment, TA), an uplink grant (UpLink grant, UL grant), a temporary cell-radio network temporary identifier (temporary cell-radio network temporary identifier, TC-RNTI), power control (power control), an indication of a resource for the terminal device to send a random access message Msg3, and the like. The Msg2 may further include other information. This is not limited in embodiments of this application.

203: After the terminal device receives the Msg2 sent by the network device, if a random access preamble indicated by a sequence number that is of the random access preamble and that is in the random access response is the same as the random access preamble sent by the terminal device to the network device in step 201, the terminal device considers that the Msg2 is a random access response for the terminal device, and sends the Msg3 on the uplink channel resource indicated by the Msg2, where the Msg3 may carry a unique user identifier.

204: After receiving the Msg3 from the terminal device, the network device returns a random access message Msg4 to the terminal device that successfully accesses the network. The network device includes the unique user identifier in the Msg4 to indicate the terminal device that successfully accesses the network, and another terminal device that does not successfully access the network initiates random access again.

2. Repeated (repetition) transmission

With the further evolution of 5G technologies, there is an increasingly strong requirement for uplink coverage enhancement in various communication scenarios (for example, satellite communication). Generally, uplink coverage may be enhanced through repeated transmission. Repeated transmission means that a terminal device sends same information on a plurality of resources, to improve a receiving success rate of a network device. Repeated transmission of a Msg3 is used as an example. That the terminal device repeatedly transmits the Msg3 to the network device may specifically mean that the terminal device sends the Msg3 on a plurality of uplink shared channel (physical uplink shared channel, PUSCH) resources.

The last step of the four-step random access is as follows: The network device sends the random access message 4 (Msg4) to the terminal device that successfully accesses the network, and the terminal device receives and successfully decodes the Msg4, where the Msg4 indicates that the terminal device successfully accesses the network. The terminal device replies to the network device with a hybrid automatic repeat request feedback (HARQ-acknowledgement, HARQ-ACK) for the Msg4. Non-terrestrial networks have communication characteristics of wide coverage, long distance, and high latency. The inventors have conducted, based on the characteristics of the non-terrestrial networks, research on how to properly design a HARQ-ACK of the terminal device for the Msg4.

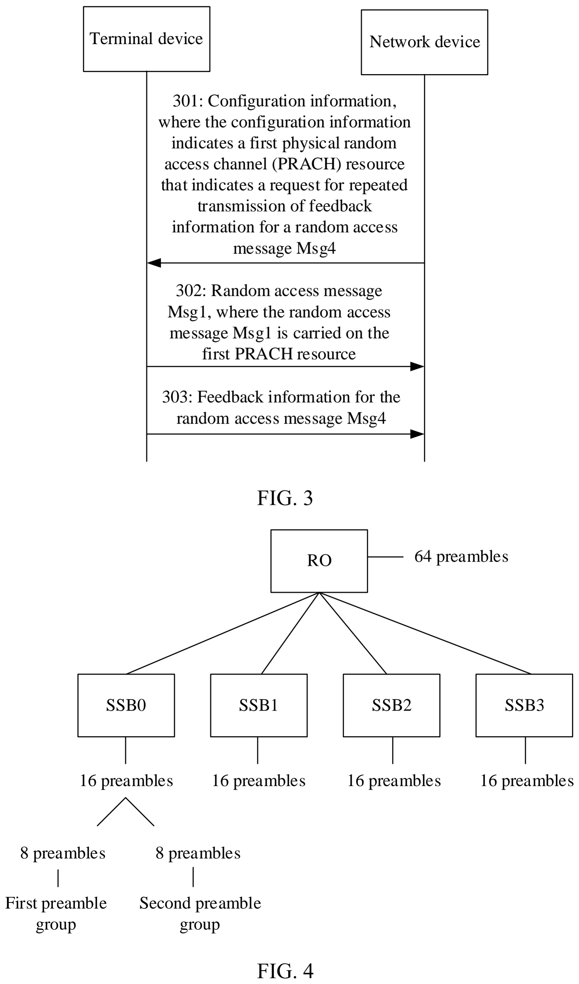

An embodiment of this application provides a communication method. Refer to FIG. 3. The method shown in FIG. 3 may be performed by a terminal device and a network device, or the method shown in FIG. 3 may be performed by a chip in a terminal device and a chip in a network device. In FIG. 3, the terminal device and the network device are used as an example for description. The terminal device and the network device in the embodiment shown in FIG. 3 may be the terminal device and the network device shown in FIG. 1. The method includes but is not limited to the following steps.

301: The network device sends configuration information to the terminal device, and correspondingly, the terminal device receives the configuration information sent by the network device, where the configuration information indicates a first physical random access channel (physical random access channel, PRACH) resource that indicates a request for repeated transmission of feedback information for a random access message Msg4.

302: The terminal device sends a random access message Msg1 to the network device, and correspondingly, the network device receives the random access message Msg1 sent by the terminal device, where the random access message Msg1 is carried on the first PRACH resource.

303: The terminal device repeatedly transmits, to the network device, the feedback information for the random access message Msg4, and correspondingly, the network device receives the feedback information that is for the random access message Msg4 and that is sent by the terminal device.

In this embodiment of this application, the terminal device may read, based on a system information block (system information block 1, SIB1), a PRACH resource that is allocated by the network device to the terminal device and that is for transmitting the random access message Msg1. The first PRACH resource indicated in the configuration information is a part of a PRACH resource allocated by the network device to the terminal device. That the first PRACH resource indicates the request for repeated transmission of the feedback information for the random access message Msg4 may also be understood as that the first PRACH resource indicates that the terminal device has a capability of repeatedly transmitting the feedback information for the random access message Msg4. The terminal device sends the random access message Msg1 to the network device on the first PRACH resource, to implicitly indicate the request for repeated transmission of the feedback information for the random access message Msg4 or indicate that the terminal device has the capability of repeatedly transmitting the feedback information for the random access message Msg4. If the terminal device sends the random access message Msg1 on another PRACH resource other than the first PRACH resource, it may be understood as that the terminal device does not request to repeatedly transmit the feedback information for the random access message Msg4.

The terminal device performing step 302 indicates that the terminal device initiates four-step random access to request to access the network device. For the four-step random access, refer to the descriptions corresponding to FIG. 2. After the network device sends the random access message Msg4 to the terminal device, the terminal device successfully decodes the random access message Msg4, and the random access message Msg4 indicates that contention-based random access of the terminal device succeeds. The terminal device performs step 303, that is, sends the feedback information for the random access message Msg4 to the network device. Optionally, the feedback information for the random access message Msg4 is a HARQ-ACK for the random access message Msg4. In step 302, the terminal device sends the random access message Msg1 on the first PRACH resource, which implicitly indicates the request for repeated transmission of the feedback information for the random access message Msg4. Therefore, in this case, the terminal device sends the feedback information for the random access message Msg4 in a repeated transmission manner. That the terminal device repeatedly transmits the feedback information for the random access message Msg4 to the network device may be understood as that the terminal device sends the feedback information for the random access message Msg4 to the network device on a plurality of physical uplink control channel (physical uplink control Channel, PUCCH) resources.

Based on the foregoing described method, the terminal device may determine the first PRACH resource based on the configuration information sent by the network device, and send the random access message Msg1 carried on the first PRACH to indicate that the terminal device requests to send the feedback information for the Msg4 in the repeated transmission manner. The terminal device sends the feedback information for the Msg4 in the repeated transmission manner, so that a success rate of the network device receiving the feedback information for the Msg4 can be improved. If the terminal device sends the random access message Msg1 on the another PRACH resource other than the first PRACH resource, it indicates that the terminal device does not request to send the feedback information for the Msg4 in the repeated transmission manner.

With reference to the foregoing described method, the following mainly describes two grouping manners of the network device for PRACH resources.

Manner 1: Preambles are grouped. A specific implementation is as follows: If one RO corresponds to one or more SSBs, preambles in one RO that correspond to one SSB include a first preamble group and a second preamble group, a preamble in the first preamble group corresponds to the first PRACH resource, a preamble in the second preamble group corresponds to a second PRACH resource, and the first PRACH resource is different from the second PRACH resource.

A common random access configuration (rachConfigCommon) in the SIB1 includes a parameter: a quantity of SSBs corresponding to one RO (ssb-perRACH-Occasion). The terminal device may determine, based on the SIB1 sent by the network device, the quantity of SSBs corresponding to one RO. In Manner 1, a value K of ssb-perRACH-Occasion is greater than or equal to 1, that is, one RO corresponds to one or more SSBs. In this case, one SSB can correspond to only a part or all of preambles in one RO. A total of L preambles are configured in one RO, where L is an integer greater than K.

Optionally, L may be 64. One RO corresponds to K SSBs, that is, one SSB corresponds to $\frac{L}{K}$ preambles in the RO. $\frac{L}{K}$ preambles may include two preamble groups: a first preamble group and a second preamble group. A preamble in the first preamble group corresponds to the first PRACH resource, and a preamble in the second preamble group corresponds to a second PRACH resource. The second PRACH resource is a resource different from the first PRACH resource. If the random access message sent by the terminal device is carried on the second PRACH resource, it indicates that the terminal device does not request to repeatedly transmit the random access message Msg4. Second PRACH resources described in the following are all resources different from the first PRACH resource, and details are not described again in the following.

For example, FIG. 4 shows that four SSBs correspond to one RO, and the four SSBs are an SSB0, an SSB1, an SSB, and an SSB3. Given that the one RO includes 64 preambles, one SSB may correspond to 16 preambles in the RO. The 16 preambles include two groups, where eight preambles belong to a first preamble group, and the other eight preambles belong to a second preamble group. The preambles in the first preamble group correspond to the first PRACH resource, and the preambles in the second preamble group correspond to the second PRACH resource. Therefore, if the terminal device selects the preamble in the first preamble group to send the random access message Msg1, it indicates that the terminal device requests to repeatedly transmit the random access message Msg4; or if the terminal device selects the preamble in the second preamble group to send the random access message Msg1, it indicates that the terminal device does not request to repeatedly transmit the random access message Msg4.

Manner 2: ROs are grouped. A specific implementation is as follows: If one SSB corresponds to a plurality of ROs, the plurality of ROs include a first RO group and a second RO group, a preamble in the first RO group corresponds to the first PRACH resource, a preamble in the second RO group corresponds to a second PRACH resource, and the first PRACH resource is different from the second PRACH resource.

There are two different application scenarios corresponding to this implementation:

1. A value K of a parameter ssb-perRACH-Occasion is less than 1.

In this scenario, one RO can correspond to only one SSB, and the SSB corresponds to all preambles in the RO. It may be understood that, a plurality of ROs corresponding to one SSB include two RO groups: a first RO group and a second RO group, all preambles in the first RO group correspond to the first PRACH resource, and all preambles in the second RO group correspond to the second PRACH resource. If the terminal device selects the preamble in the first RO group to send the random access message Msg1, it indicates that the terminal device requests to repeatedly transmit the random access message Msg4; or if the terminal device selects the preamble in the second RO group to send the random access message Msg1, it indicates that the terminal device does not request to repeatedly transmit the random access message Msg4.

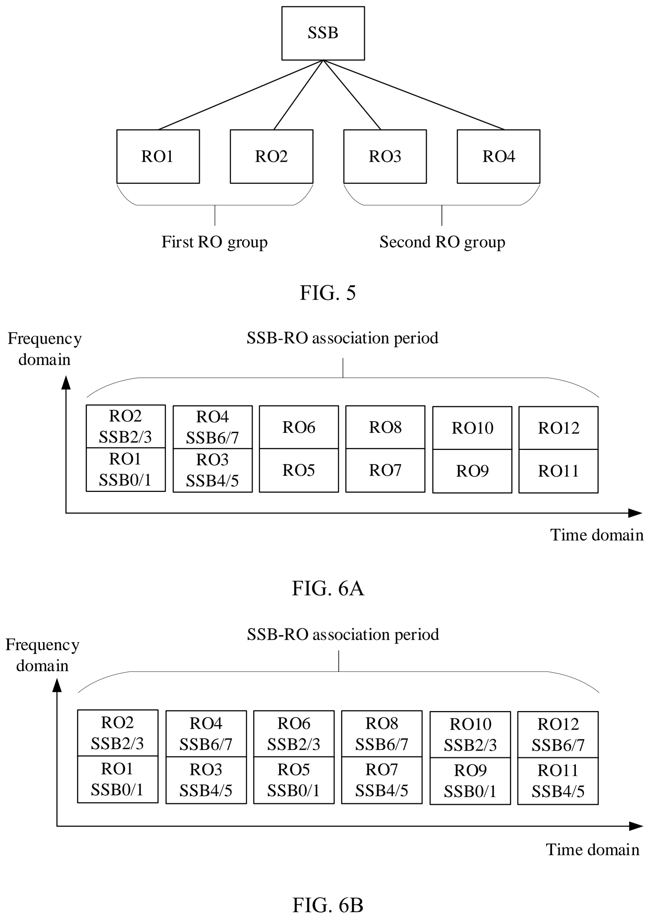

For example, FIG. 5 shows that one SSB corresponds to four ROs, and the four ROs are an RO0, an RO1, an RO2, and an RO3. The four ROs are grouped into two groups, where the RO1 and the RO2 belong to a first RO group, and the RO3 and the RO4 belong to a second RO group. It may be understood that, preambles in the first RO group correspond to the first PRACH resource, and preambles in the second RO group correspond to the second PRACH resource. If the terminal device selects a preamble in the RO1 or a preamble in the RO2 to send the random access message Msg1, it indicates that the terminal device requests to repeatedly transmit the random access message Msg4; or if the terminal device selects a preamble in the RO3 or a preamble in the RO4 to send the random access message Msg1, it indicates that the terminal device does not request to repeatedly transmit the random access message Msg4.

2. A value K of a parameter ssb-perRACH-Occasion is greater than or equal to 1.

If an RO configuration selected by a random access configuration index (rach configuration index) is relatively dense in time domain, all SSB indexes may be associated in an SSB-RO association period using only a small part of time domain resources, and a relatively large quantity of time domain resources are wasted in the SSB-RO association period. For example, as shown in FIG. 6A, an SSB0 to an SSB are associated with an RO1 to an RO4, and one RO corresponds to two SSBs. There are a total of 12 ROs included in an SSB-RO association period. However, only the RO1 to the RO4 are associated with the SSBs, and none of an RO5 to an RO12 is associated with an SSB. This causes a waste of time domain resources. Therefore, to reduce the waste of these RO resources, the association period may be enhanced, that is, mapping between the SSBs and the ROs in the association period may be increased, until all the RO resources in the configuration period are used. As shown in FIG. 6B, the RO5 to the RO12 each are associated with SSBs, so that the waste of time domain resources can be reduced.

Therefore, when the foregoing described association method is used, one RO corresponds to a plurality of SSBs, and one SSB corresponds to a plurality of ROs. As shown in FIG. 6B, the RO1 corresponds to the SSB0 and the SSB1, and the SSB0 corresponds to the RO1, the RO5, and the RO9. Therefore, a plurality of ROs corresponding to one SSB include two RO groups: a first RO group and a second RO group, a preamble that corresponds to the SSB and that is in the first RO group corresponds to the first PRACH resource, and a preamble that corresponds to the SSB and that is in the second RO group corresponds to the second PRACH resource. It is assumed that the terminal device selects one SSB, and RO groups corresponding to the SSB are a first RO group and a second RO group. If the terminal device selects a preamble that corresponds to the SSB and that is in the first RO group to send the random access message Msg1, it indicates that the terminal device requests to repeatedly transmit the random access message Msg4; or if the terminal device selects a preamble that corresponds to the SSB and that is in the second RO group to send the random access message Msg1, it indicates that the terminal device does not request to repeatedly transmit the random access message Msg4.

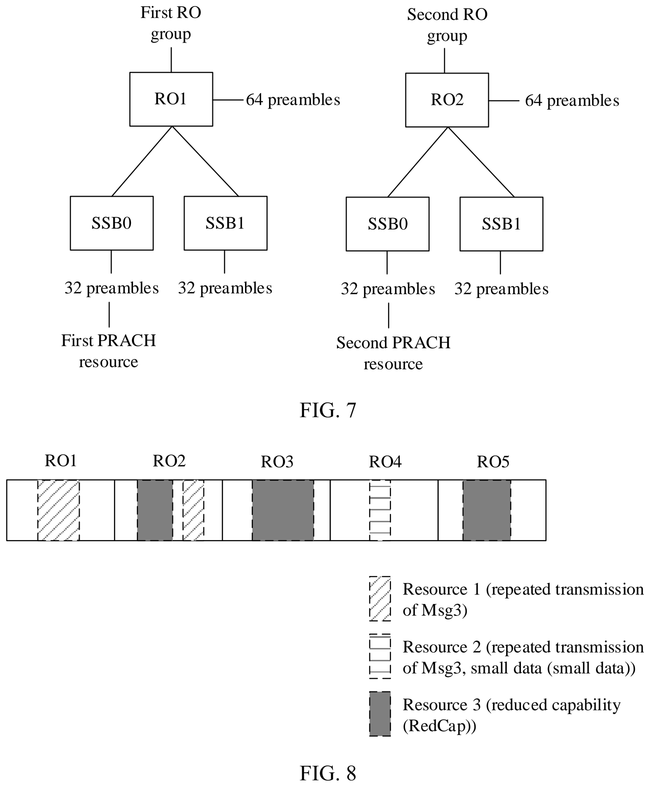

For example, FIG. 7 shows that each of an RO1 and an RO2 correspond to an SSB0 and an SSB1. Given that one RO includes 64 preambles, the SSB0 corresponds to 32 preambles in the RO1 and corresponds to 32 preambles in the RO2. The RO1 and the RO2 corresponding to the SSB0 are grouped, where the RO1 belongs to a first RO group, and the RO2 belongs to a second RO group. The 32 preambles in the RO1 that correspond to the SSB0 correspond to the first PRACH resource, and the 32 preambles in the RO2 that correspond to the SSB0 correspond to the second PRACH resource. When the terminal device selects the SSB0, the terminal device sends the random access message Msg1 using the preamble that corresponds to the SSB0 and that is in the RO1 or the preamble that corresponds to the SSB0 and that is in the RO2. If the terminal device selects the preamble that corresponds to the SSB0 and that is in the RO1, it indicates that the terminal device requests to repeatedly transmit the random access message Msg4; or if the terminal device selects the preamble that corresponds to the SSB0 and that is in the RO2 to send the random access message Msg1, it indicates that the terminal device does not request to repeatedly transmit the random access message Msg4.

Based on the foregoing grouping manners, the terminal device can select a PRACH resource (namely, the first PRACH resource) in a group associated with repeated transmission of the feedback information for the random access message Msg4, to implicitly indicate the request for repeated transmission of the feedback information for the random access message Msg4.

The foregoing mainly describes the three grouping manners for PRACH resources. The following mainly describes the configuration information.

In a possible implementation, the configuration information indicates that the network device supports repeated transmission of the feedback information for the random access message Msg4. The terminal device may determine, based on the configuration information, whether the network device supports repeated transmission of the feedback information for the random access message Msg4, to determine whether to request to repeatedly transmit the feedback information for the random access message Msg4. Optionally, the configuration information is a system information block SIB1, a feature priority (featurePriorities) information element (information element, IE) in the SIB1 includes a first parameter, and the first parameter indicates that the network device supports repeated transmission of the feedback information for the random access message Msg4. For example, the featurePriorities IE may be represented as follows:

```
featurePriorities-r17                SEQUENCE {

redCapPriority-r17               FeaturePriority-r17                OPTIONAL,
-- Need R

slicingPriority-r17                                      FeaturePriority-r17
OPTIONAL, -- Need R

msg3-Repetitions-Priority-r17                            FeaturePriority-r17
OPTIONAL, -- Need R

sdt-Priority-r17                                         FeaturePriority-r17
OPTIONAL   -- Need R

msg4-PUCCH-Priority-r18                                  FeaturePriority-r17
OPTIONAL   -- Need R

}
```

msg4-PUCCH-Priority-r18 is the added first parameter. A value of the parameter is of a FeaturePriority-r17 type, that is, may range from 0 to 7, and a smaller value indicates a higher priority of selecting this feature. The featurePriorities IE may further include another feature in addition to repeated transmission of the feedback information for the Msg4. For example, the featurePriorities IE includes a parameter msg3-Repetition-Priority-r17, and the parameter msg3-Repetition-Priority-r17 indicates that repeated transmission of a Msg3 is supported. Based on this implementation, the terminal device can determine the feature indicating that the network device supports repeated transmission of the feedback information for the Msg4. This helps prevent the terminal device from performing some ambiguous operations without learning of the feature indicating whether the network device supports repeated transmission of the feedback information for the Msg4.

Further, after the first parameter is introduced into the featurePriorities IE, a feature corresponding to repeated transmission of the feedback information for the Msg4 is also introduced into rachConfigCommon. For example, a feature combination FeatureCombination-r17 included in the rachConfigCommon may be represented as follows:

FeatureCombination-r17 ::= SEQUENCE {

    redCap-r17                                                       ENUMERATED {true}

OPTIONAL,   -- Need R

smallData-r17                 ENUMERATED {true}                 OPTIONAL,

-- Need R

nsag-r17                        NSAG-List-r17                 OPTIONAL,

-- Need R

msg3-Repetitions-r17         ENUMERATED {true}                 OPTIONAL,

-- Need R

msg4-PUCCH-Repetitions-r18   ENUMERATED {true}                 OPTIONAL,

-- Need R

    spare4                                                ENUMERATED {true}

OPTIONAL,   -- Need R

spare3                        ENUMERATED {true}                 OPTIONAL,

-- Need R

spare2                        ENUMERATED {true}                 OPTIONAL,

-- Need R

spare1                        ENUMERATED {true}                 OPTIONAL

-- Need R

}

msg4-PUCCH-Repetitions-Priority-r18 is an added parameter. When the feature combination FeatureCombination-r17 includes the msg4-PUCCH-Repetitions-Priority-r18, it indicates that a PRACH resource corresponding to the feature combination is the first PRACH resource.

In a possible implementation, the configuration information indicates a sequence number of an RO in the first PRACH resource or a sequence number of a preamble in the first PRACH resource. The following provides description with reference to the foregoing described grouping manners for PRACHs.

1. If Manner 2 in the foregoing grouping manners is used, the configuration information indicates a sequence number of an RO in the first RO group. Optionally, an association configuration, specifically, a feature-preamble association parameter (FeatureCombinationPreambles) may be added to a feature-PRACH resource association list (FeatureCombinationPreambleList) included in the rachConfigCommon in the SIB1. The FeatureCombinationPreambles specifically includes the following parameters:

```
FeatureCombinationPreambles-r17 ::=      SEQUENCE {
featureCombination-r17                      FeatureCombination-r17,
startPreambleForThisPartition-r17        INTEGER (0..63),
       numberOfPreamblesPerSSB-ForThisPartition-r17 INTEGER (1..64),
       ssb-SharedRO-MaskIndex-r17                INTEGER (1..15)

       ...

  }
```

The sequence number of the RO in the first RO group may be indicated by the parameter ssb-SharedRO-MaskIndex-r17. A value range of the ssb-SharedRO-MaskIndex-r17 is 0 to 15, and each value correspondingly indicates a sequence number of a group of ROs. For details, refer to Table 1.

Table 1

| Value of ssb-SharedRO-MaskIndex | Sequence number of an RO | Value of ssb-SharedRO-MaskIndex | Sequence number of an RO |
|---|---|---|---|
| 0 | All | 8 | 8 |
| 1 | 1 | 9 | All even numbers |
| 2 | 2 | 10 | All odd numbers |
| 3 | 3 | 11 | Reserved |
| 4 | 4 | 12 | Reserved |
| 5 | 5 | 13 | Reserved |
| 6 | 6 | 14 | Reserved |
| 7 | 7 | 15 | Reserved |

For example, when ssb-SharedRO-MaskIndex-r17 is 9, it indicates that an RO with an even sequence number among ROs corresponding to each SSB belongs to the first RO group and indicates the request for repeated transmission of the feedback information for the Msg4; and when ssb-SharedRO-MaskIndex-r17 is 10, it indicates that an RO with an odd sequence number among RO resources corresponding to each SSB belongs to the first RO group and indicates the request for repeated transmission of the feedback information for the Msg4. For the parameter FeatureCombination-r17, refer to the foregoing descriptions. Details are not described herein again. Based on this implementation, the terminal device can determine the first PRACH resource based on a sequence number of the RO group. This can be implemented by reusing an existing signaling mechanism, with relatively small modifications to standards.

2. If Manner 1 in the foregoing grouping manners is used, the configuration information indicates a sequence number of a preamble in the first preamble group. Optionally, a specific indication manner may be indicating by using a parameter numberOfPreamblePerSSB-ForThisPartition-r17 in the foregoing described parameter FeatureCombination-Preambles. A value range of the numberOfPreamblePerSSB-ForThisPartition-r17 is 1 to 64, which correspond to 64 preambles included in one RO. The FeatureCombinationPreambles is the same as described above, and details are not described herein again. Based on this implementation, the terminal device can determine the first PRACH resource based on a sequence number of a preamble group. This can be implemented by reusing an existing signaling mechanism, with relatively small modifications to standards.

In a possible implementation, the configuration information indicates that the first PRACH resource includes a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1. Based on this implementation, the terminal device further indicates, by using the PRACH resource on which the Msg1 is carried, the quantity of repeated transmissions that corresponds to repeated transmission of the feedback information for the random access message Msg4. This can be implemented by reusing the existing signaling mechanism, with relatively small modifications to the standards.

The quantity of repeated transmissions may be understood as a quantity of PUCCH resources on which the feedback information for the random access message Msg4 is carried. It should be additionally noted that the configuration information may indicate that the first PRACH resource includes a plurality of PRACH resources, and each PRACH resource indicates a different quantity of repeated transmissions of the feedback information for the random access message Msg4. In embodiments of this application, an example in which the first PRACH resource includes the third PRACH resource and the fourth PRACH resource is used. An implementation in which the first PRACH may further include a plurality of PRACH resources can be similarly derived. A quantity of the plurality of PRACH resources included in the first PRACH resource is not limited.

Optionally, the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource. If the manner in which ROs are grouped is used, the configuration information indicates the sequence number of the RO corresponding to the third PRACH resource and the sequence number of the RO corresponding to the fourth PRACH resource. If the manner in which preambles are grouped is used, the configuration information indicates the sequence number of the preamble corresponding to the third PRACH resource and the sequence number of the preamble corresponding to the fourth PRACH resource. Further specifically and optionally, the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

Taking the manner in which preambles are grouped as an example, the sequence number of the preamble corresponding to the third PRACH resource and the sequence number of the preamble corresponding to the fourth PRACH resource are indicated based on the foregoing described FeatureCombinationPreambles. The FeatureCombinationPreambles specifically includes the following parameters:

FeatureCombinationPreambles-r17 ::=     SEQUENCE {

featureCombination-r17                              FeatureCombination-r17,

startPreambleForThisPartition-r17        INTEGER (0..63),

numberOfPreamblesPerSSB-ForThisPartition-r17 INTEGER (1..64),

ssb-SharedRO-MaskIndex-r17                                               INTEGER  (1..15)

OPTIONAL, -- Need S

Msg4-PreamblePratition-r18        SEQUENCE{

   startPreamblePerRO-r18    SEQUENCE(SIZE(1..3)) OF INTEGER (0..63),

   max-msg4Ack-RepNum-r18    ENUMERATED {2,4,8}

   numberOfPreamblesPerRepNum-ForThisPartition-r18     SEQUENCE    (SIZE(1..3))    OF

INTEGER (0..63)

}

groupBconfigured-r17                          SEQUENCE {

ra-SizeGroupA-r17                                ENUMERATED {b56, b144, b208, b256, b282, b480, b640,

                                     b800,  b1000,  b72,  spare6,  spare5,  spare4,

spare3, spare2, spare1},

messagePowerOffsetGroupB-r17        ENUMERATED {minusinfinity, dB0, dB5, dB8, dB10,

dB12, dB15, dB18},

numberOfRA-PreamblesGroupA-r17     INTEGER (1..64)

}

Msg4-PreamblePratition-r18 is an added field, and indicates a mapping relationship between groups of preambles in an RO and a quantity of repeated transmissions. This field includes three parameters: max-msg4Ack-RepNum-r18, startPreamblePerRO-r18, and numberOfPreamblesPerRepNum-forThisPartition-r18.

The max-msg4Ack-RepNum-r18 indicates a maximum quantity, of repeated transmissions of the feedback information for the random access message Msg4, supported in a current access procedure. The parameter is of an enumeration type (for example, a value may be 2, 4, 8, or the like). For example, currently supported quantities of repeated transmissions of the feedback information for the random access message Msg4 are 1, 2, 4, and 8. Therefore, assuming that the max-msg4Ack-RepNum-r18 is 4, it may be understood as that the preambles in the RO need to be divided into two segments, which respectively correspond to a preamble indicating that the quantity of repeated transmissions of the feedback information for the random access message Msg4 is 2 and a preamble indicating that the quantity of repeated transmissions of the feedback information for the random access message Msg4 is 4. It may be further understood as that the FeatureCombinationPreambles corresponds to the first PRACH resource, the first PRACH resource includes the third PRACH resource and the fourth PRACH resource, the third PRACH resource indicates that the quantity of repeated transmissions of the feedback information for the random access message Msg4 is 2, and the fourth PRACH resource indicates that the quantity of repeated transmissions of the feedback information for the random access message Msg4 is 4.

The startPreamblePerRO-r18 indicates a start sequence number of a preamble in each group of RPACH resources. The parameter is of an array type. For example, it is assumed that the startPreamblePerRO-r18 includes two values: 0 and 28. A quantity of arrays indicates that the preambles in the RO are divided into two segments, for example, are divided into the third PRACH resource and the fourth PRACH resource. Each value in the array represents a sequence number of a start preamble in each preamble segment. It may be further understood as that a 1st preamble in the third PRACH resource is 0 and a 1st preamble in the fourth PRACH resource is 28.

The numberOfPreamblesPerRepNum-forThisPartition-r18 indicates a quantity of preambles corresponding to each group of PRACH resources. For example, this array includes two values: 28 and 28, indicating that the preambles are divided into two segments and each segment has 28 consecutive preamble resources. That is, it may be further understood as that the third PRACH resource and the fourth PRACH resource each correspond to 28 preambles. It may be learned, based on the startPreamblePerRO-r18 including 0 and 28, that sequence numbers of the preambles corresponding to the third PRACH resource are 0 to 27, and sequence numbers of the preambles corresponding to the fourth PRACH resource are 28 to 55.

In another possible implementation, the configuration information may directly indicate that the network device supports N repeated transmissions of the feedback information for the random access message Msg4, and the configuration information indicates that the network device supports M repeated transmissions of the feedback information for the random access message Msg4. The configuration information may directly indicate the third PRACH resource and the fourth PRACH resource without a need to indicate the first PRACH resource. For example, new fields msg4-pucch-repetitions-r18-1 and msg4-pucch-repetitions-r18-2 may be introduced into the FeatureCombination-r17. The field msg4-pucch-repetitions-r18-1 indicates that a corresponding PRACH resource is the third PRACH resource, indicating to perform N repeated transmissions of the feedback information for the random access message Msg4. The field msg4-pucch-repetitions-r18-2 indicates that a corresponding PRACH resource is the fourth PRACH resource, indicating to perform M repeated transmissions of the feedback information for the random access message Msg4. It should be additionally noted that the third PRACH resource and the fourth PRACH resource are merely used as an example herein. Specifically, PRACH resources indicating more times may further be indicated, a specific implementation of which can be similarly derived with reference to the foregoing implementation. In addition, a specific implementation in which the configuration information indicates the third PRACH resource and the fourth PRACH resource is the same as the foregoing implementation in which the configuration information indicates the first PRACH resource. Details are not described again in this embodiment of this application.

In a possible implementation, the first PRACH resource further indicates a request for repeated transmission of the random access message Msg3. In other words, the first PRACH resource is associated with both repeated transmission of the feedback information for the random access message Msg4 and repeated transmission of the random access message Msg3. When the terminal device sends the random access message Msg1, if the Msg1 is carried on the first PRACH resource, it indicates that the terminal device indicates both the request for repeated transmission of the feedback information for the random access message Msg4 and the request for repeated transmission of the random access message Msg3.

Optionally, a specific implementation may be: A new index is introduced into the FeatureCombinationPreambles, to associate the request for transmission of the random access message Msg3 with the request for repeated transmission of the feedback information for the random access message Msg4. For example, the FeatureCombinationPreambles is specifically represented as follows:

```
FeatureCombinationPreambles-r17 ::=      SEQUENCE {
featureCombination-r17                          FeatureCombination-r17,
startPreambleForThisPartition-r17       INTEGER (0..63),
numberOfPreamblesPerSSB-ForThisPartition-r17 INTEGER (1..64),
ssb-SharedRO-MaskIndex-r17                                          INTEGER  (1..15)
OPTIONAL, -- Need S
      ssb-SharedRO-MaskIndex-r18                                    INTEGER  (1..15)
OPTIONAL, -- Need S
```

ssb-SharedRO-MaskIndex-r18 is the added index. The FeatureCombinationPreambles configuration includes a feature of repeated transmission of the random access message Msg3. An RO index value indicated by the ssb-SharedRO-MaskIndex-r18 is the same as an RO index value associated with the current FeatureCombinationPreambles, indicating that the request for the random access message Msg3 is associated with the request for repeated transmission of the feedback information for the random access message Msg4. That is, the first PRACH resource associated with the FeatureCombinationPreambles indicates both the request for repeated transmission of the feedback information for the random access message Msg4 and the request for repeated transmission of the random access message Msg3.

Optionally, a value of the foregoing described ssb-SharedRO-MaskIndex-r18 may be of an enumeration type. If the value is enable, it indicates that the request for repeated transmission of the random access message Msg3 is associated with the request for repeated transmission of the feedback information for the random access message Msg4. If the value is disabled, it indicates that the request for the random access message Msg3 is not associated with the request for repeated transmission of the feedback information for the random access message Msg4.

FIG. 8 shows an RO resource indication. In FIG. 8, five ROs are included, and there are three groups of resource types in total. A resource 1 indicates the request for repeated transmission of the random access message Msg3. A resource 2 indicates a request for repeated transmission of the random access message Msg3 and small data (small data) transmission. A resource 3 indicates a request for reduced capability (Reduced Capability, RedCap) transmission. According to this embodiment of this application, the request for the random access message Msg3 is associated with the request for repeated transmission of the feedback information for the random access message Msg4. Therefore, the resource 1 and the resource 2 also indicate the request for repeated transmission of the feedback information for the random access message Msg4.

The foregoing implementation helps reduce further segmentation of the PRACH resource, thereby reducing a probability of collision occurring when the terminal device initiates random access. In addition to the request for repeated transmission of the random access message Msg3, the first PRACH resource may indicate a request for another characteristic transmission mode or indicate another capability of the terminal device. For example, the first PRACH resource may indicate a request for small data transmission, RedCap transmission, and/or the like; or the first PRACH may indicate to transmit the random access message Msg3 without repetition. This is not limited in embodiments of this application. A specific implementation is the same as the foregoing described implementation in which the first PRACH indicates to repeatedly transmit the random access message Msg3, and details are not described herein again.

To implement functions in the method provided in embodiments of this application, the terminal device and the network device each may include a hardware structure and/or a software module, and implement the foregoing functions in a form of hardware structure, or software module, or combination of a hardware structure and a software module. Whether a function in the foregoing functions is performed by the hardware structure, the software module, or the combination of the hardware structure and the software module depends on particular applications and design constraints of the technical solutions.

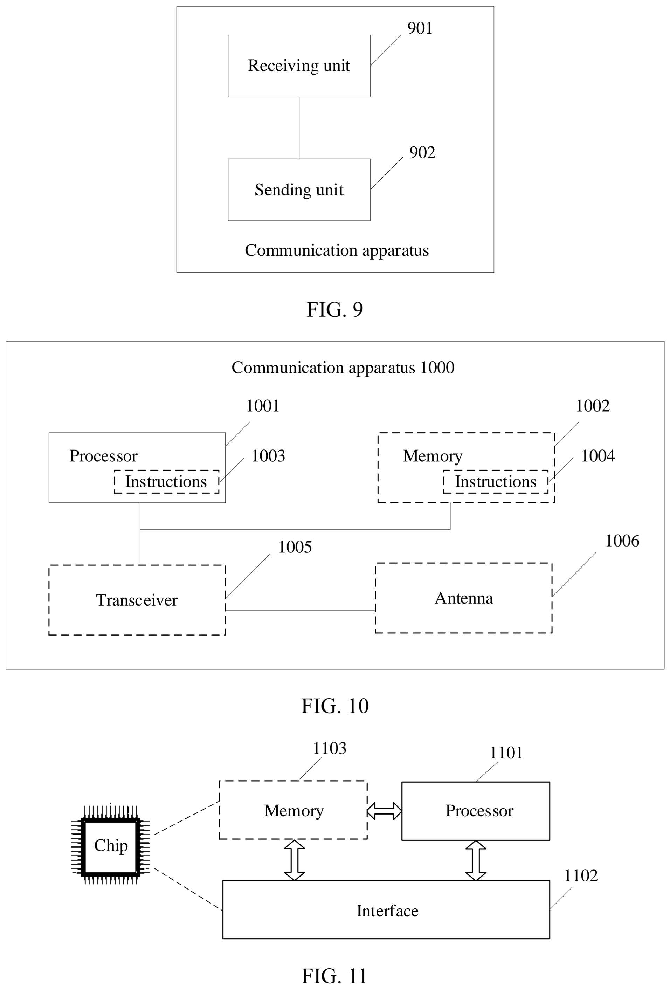

A communication apparatus shown in FIG. 9 may be a terminal device or a network device, or an apparatus that can be used in combination with the terminal device or the network device. In a possible implementation, the communication apparatus may include modules or units that are in one-to-one correspondence with the method/operations/steps/actions performed by the terminal device or the network device in the foregoing method embodiments. The unit may be a hardware circuit or software, or may be implemented by a hardware circuit in combination with software. Alternatively, the communication apparatus may be a chip system, and is configured to perform a part or all of the functions of the terminal device or the network device in the method embodiment described in FIG. 3.

FIG. 9 is a diagram of a structure of a communication apparatus according to an embodiment of this application. The communication apparatus shown in FIG. 9 may include a receiving unit 901 and a sending unit 902.

When the communication apparatus is configured to implement the functions of the terminal device in the method embodiment shown in FIG. 3, the receiving unit 901 is configured to receive configuration information from a network device, where the configuration information indicates a first physical random access channel PRACH resource, the first PRACH resource indicates a request for repeated transmission of feedback information for a random access message Msg4, and the first PRACH resource is a part of a PRACH resource allocated by the network device; the sending unit 902 is configured to send a random access message Msg1 to the network device, where the random access message Msg1 is carried on the first PRACH resource; and the sending unit 902 is further configured to repeatedly transmit, to the network device, the feedback information for the random access message Msg4.

In a possible implementation, if one RO corresponds to one or more SSBs, preambles in one RO that correspond to one SSB include a first preamble group and a second preamble group, a preamble in the first preamble group corresponds to the first PRACH resource, a preamble in the second preamble group corresponds to a second PRACH resource, and the first PRACH resource is different from the second PRACH resource.

In a possible implementation, if one SSB corresponds to a plurality of ROs, the plurality of ROs include a first RO group and a second RO group, a preamble in the first RO group corresponds to the first PRACH resource, a preamble in the second RO group corresponds to a second PRACH resource, and the first PRACH resource is different from the second PRACH resource.

Optionally, a preamble that corresponds to the SSB and that is in the first RO group corresponds to the first PRACH resource, and a preamble that corresponds to the SSB and that is in the second RO group corresponds to the second PRACH resource.

In a possible implementation, the configuration information indicates a sequence number of an RO in the first RO group.

In a possible implementation, the configuration information indicates a sequence number of a preamble in the first preamble group.

In a possible implementation, the configuration information is a system information block SIB1, a feature priority information element IE in the SIB1 includes a first parameter, and the first parameter indicates that the network device supports repeated transmission of the feedback information for the random access message Msg4.

In a possible implementation, the configuration information indicates that the first PRACH resource includes a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1.

In a possible implementation, the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

In a possible implementation, the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

In a possible implementation, the configuration information indicates that the network device supports N repeated transmissions of the feedback information for the random access message Msg4, and the configuration information indicates that the network device supports M repeated transmissions of the feedback information for the random access message Msg4.

In a possible implementation, the first PRACH resource further indicates to repeatedly transmit a random access message Msg3.

When the communication apparatus is configured to implement the functions of the network device in the method embodiment shown in FIG. 3, the sending unit 902 is configured to send configuration information to a terminal device, where the configuration information indicates a first physical random access channel PRACH resource, the first PRACH resource indicates a request for repeated transmission of feedback information for a random access message Msg4, and the first PRACH resource is a part of a PRACH resource allocated to the terminal device; the receiving unit 901 is configured to receive a random access message Msg1 sent by the terminal device, where the random access message Msg1 is carried on the first PRACH resource; and the receiving unit 901 is further configured to receive the feedback information that is for the random access message Msg4 and that is sent by the terminal device.

In a possible implementation, if one RO corresponds to one or more SSBs, preambles in one RO that correspond to one SSB include a first preamble group and a second preamble group, a preamble in the first preamble group corresponds to the first PRACH resource, a preamble in the second preamble group corresponds to a second PRACH resource, and the first PRACH resource is different from the second PRACH resource.

In a possible implementation, if one SSB corresponds to a plurality of ROs, the plurality of ROs include a first RO group and a second RO group, a preamble in the first RO group corresponds to the first PRACH resource, a preamble in the second RO group corresponds to a second PRACH resource, and the first PRACH resource is different from the second PRACH resource.

Optionally, a preamble that corresponds to the SSB and that is in the first RO group corresponds to the first PRACH resource, and a preamble that corresponds to the SSB and that is in the second RO group corresponds to the second PRACH resource.

In a possible implementation, the configuration information indicates a sequence number of an RO in the first RO group.

In a possible implementation, the configuration information indicates a sequence number of a preamble in the first preamble group.

In a possible implementation, the configuration information is a system information block SIB1, a feature priority information element IE in the SIB1 includes a first parameter, and the first parameter indicates that the network device supports repeated transmission of the feedback information for the random access message Msg4.

In a possible implementation, the configuration information indicates that the first PRACH resource includes a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1.

In a possible implementation, the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

In a possible implementation, the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

In a possible implementation, the configuration information indicates that the network device supports N repeated transmissions of the feedback information for the random access message Msg4, and the configuration information indicates that the network device supports M repeated transmissions of the feedback information for the random access message Msg4.

In a possible implementation, the first PRACH resource further indicates to repeatedly transmit a random access message Msg3.

For more detailed descriptions of the receiving unit 901 and the sending unit 902, refer to corresponding related descriptions in the method embodiment shown in FIG. 3.

FIG. 10 is a diagram of a structure of another communication apparatus. The communication apparatus 1000 may be the terminal device in the foregoing method embodiments, or may be a chip, a chip system, a processor, or the like that supports the terminal device in implementing the foregoing method. The communication apparatus may be configured to implement the method described in the foregoing method embodiments. For details, refer to the descriptions in the foregoing method embodiments.

Alternatively, the communication apparatus 1000 may be the network device in the foregoing method embodiments, or may be a chip, a chip system, a processor, or the like that supports the network device in implementing the foregoing method. The communication apparatus may be configured to implement the method described in the foregoing method embodiments. For details, refer to the descriptions in the foregoing method embodiments.

The communication apparatus 1000 may include one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1000 may include one or more memories 1002, where the memory 1002 stores instructions 1004. The instructions may be run on the processor 1001, to enable the communication apparatus 1000 to perform the method described in the foregoing method embodiments. Optionally, the memory 1002 may further store data. The processor 1001 and the memory 1002 may be separately disposed, or may be integrated together.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1000 is the terminal device. In this case, the processor 1001 is configured to perform a data processing operation of the terminal device in the foregoing method embodiments. The transceiver 1005 is configured to perform data sending and data receiving operations of the terminal device in the foregoing method embodiments.

Alternatively, the communication apparatus 1000 is the network device. In this case, the processor 1001 is configured to perform a data processing operation of the network device in the foregoing method embodiments. The transceiver 1005 is configured to perform data sending and data receiving operations of the network device in the foregoing method embodiments.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1001 may store instructions 1003, and the instructions 1003 are run on the processor 1001, to enable the communication apparatus 1000 to perform the method described in the foregoing method embodiments. The instructions 1003 may be built into the processor 1001. In this case, the processor 1001 may be implemented by hardware.

In still another possible design, the communication apparatus 1000 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (Radio Frequency Integrated Circuit, RFIC), a mixed-signal IC, an application-specific integrated circuit (application-specific integrated circuit, ASIC), a printed circuit board (printed circuit board, PCB), an electronic device, or the like.

The communication apparatus described in the foregoing embodiment may be a terminal device or a network device, but a scope of the communication apparatus described in embodiments of this application is not limited thereto, and a structure of the communication apparatus may not be limited to the structure in FIG. 10. The communication apparatus may be an independent device or may be a part of a large device. For example, the communication apparatus may be:

(1) an independent integrated circuit IC, a chip, a chip system, or a chip subsystem;
(2) a set that has one or more ICs, where optionally, the IC set may also include a storage component configured to store data and instructions;
(3) an ASIC, for example, a modem (Mobile Station Modem, MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a structure of a chip shown in FIG. 11. The chip shown in FIG. 11 includes a processor 1101 and an interface 1102. Optionally, the chip may further include a memory 1103. There may be one or more processors 1101, and there may be a plurality of interfaces 1102.
In a design, when the chip is configured to implement a function of the terminal device in embodiments of this application:

the interface 1102 is configured to input or output a signal; and
the processor 1101 is configured to perform a data processing operation of the terminal device in the foregoing method embodiments.

In another design, when the chip is configured to implement a function of the network device in embodiments of this application:

the interface 1102 is configured to input or output a signal; and
the processor 1101 is configured to perform a data processing operation of the network device in the foregoing method embodiments.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the communication apparatus provided in embodiments of this application may also correspondingly implement these features or functions. Details are not described herein.
It should be noted that the processor in embodiments of this application may be an integrated circuit chip, and has a signal processing capability. In an implementation process, steps in the foregoing method embodiments can be implemented by a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.
It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

This application further provides a computer-readable medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

All or a part of the foregoing embodiments may be implemented by software, hardware, firmware, or any combination thereof. When software is used to implement the embodiments, all or a part of the embodiments may be implemented in a form of computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the foregoing embodiments, the description of each embodiment has respective focuses. For a part that is not described in detail in an embodiment, refer to related descriptions in other embodiments.

**Claims**

1. A communication method, wherein the method comprises:

   receiving configuration information from a network device, wherein the configuration information indicates a first physical random access channel PRACH resource, the first PRACH resource indicates a request for repeated transmission of feedback information for a random access message Msg4, and the first PRACH resource is a part of a PRACH resource allocated by the network device;
   sending a random access message Msg1 to the network device, wherein the random access message Msg1 is carried on the first PRACH resource; and
   repeatedly transmitting, to the network device, the feedback information for the random access message Msg4.

2. The method according to claim 1, wherein if one physical random access channel transmission occasion RO corresponds to one or more synchronization signal blocks SSBs, preambles in one RO that correspond to one SSB comprise a first preamble group and a second preamble group, a preamble in the first preamble group corresponds to the first PRACH resource, a preamble in the second preamble group corresponds to a second PRACH resource, and the first PRACH resource is different from the second PRACH resource.

3. The method according to claim 1, wherein if one SSB corresponds to a plurality of ROs, the plurality of ROs comprise a first RO group and a second RO group, a preamble in the first RO group corresponds to the first PRACH resource, a preamble in the second RO group corresponds to a second PRACH resource, and the first PRACH resource is different from the second PRACH resource.

4. The method according to claim 3, wherein a preamble that corresponds to the SSB and that is in the first RO group corresponds to the first PRACH resource, and a preamble that corresponds to the SSB and that is in the second RO group corresponds to the second PRACH resource.

5. The method according to claim 3 or 4, wherein the configuration information indicates a sequence number of an RO in the first RO group.

6. The method according to claim 2, wherein the configuration information indicates a sequence number of a preamble in the first preamble group.

7. The method according to any one of claims 1 to 6, wherein the configuration information is a system information block SIB1, a feature priority information element IE in the SIB1 comprises a first parameter, and the first parameter indicates that the network device supports repeated transmission of the feedback information for the random access message Msg4.

8. The method according to any one of claims 1 to 7, wherein the configuration information indicates that the first PRACH resource comprises a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1.

9. The method according to claim 8, wherein the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

10. The method according to claim 9, wherein that the configuration information indicates the sequence number of the RO corresponding to the third PRACH resource or the sequence number of the preamble corresponding to the third PRACH resource, and the sequence number of the RO corresponding to the fourth PRACH resource or the sequence number of the preamble corresponding to the fourth PRACH resource comprises:
the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

11. The method according to any one of claims 1 to 10, wherein the configuration information indicates that the network device supports N repeated transmissions of the feedback information for the random access message Msg4, and the configuration information indicates that the network device supports M repeated transmissions of the feedback information for the random access message Msg4.

12. The method according to any one of claims 1 to 11, wherein the first PRACH resource further indicates to repeatedly transmit a random access message Msg3.

13. A communication method, wherein the method comprises:

sending configuration information to a terminal device, wherein the configuration information indicates a first physical random access channel PRACH resource, the first PRACH resource indicates a request for repeated transmission of feedback information for a random access message Msg4, and the first PRACH resource is a part of a PRACH resource allocated to the terminal device;
receiving a random access message Msg1 sent by the terminal device, wherein the random access message Msg1 is carried on the first PRACH resource; and
receiving the feedback information that is for the random access message Msg4 and that is sent by the terminal device.

14. The method according to claim 13, wherein if one physical random access channel transmission occasion RO corresponds to one or more synchronization signal blocks SSBs, preambles in one RO that correspond to one SSB comprise a first preamble group and a second preamble group, a preamble in the first preamble group corresponds to the first PRACH resource, a preamble in the second preamble group corresponds to a second PRACH resource, and the first PRACH resource is different from the second PRACH resource.

15. The method according to claim 13, wherein if one SSB corresponds to a plurality of ROs, the plurality of ROs comprise a first RO group and a second RO group, a preamble in the first RO group corresponds to the first PRACH resource, a preamble in the second RO group corresponds to a second PRACH resource, and the first PRACH resource is different from the second PRACH resource.

16. The method according to claim 13, wherein a preamble that corresponds to the SSB and that is in the first RO group corresponds to the first PRACH resource, and a preamble that corresponds to the SSB and that is in the second RO group corresponds to the second PRACH resource.

17. The method according to claim 15 or 16, wherein the configuration information indicates a sequence number of an RO in the first RO group.

18. The method according to claim 14, wherein the configuration information indicates a sequence number of a preamble in the first preamble group.

19. The method according to any one of claims 13 to 18, wherein the configuration information is a system information block SIB1, a feature priority information element IE in the SIB1 comprises a first parameter, and the first parameter indicates that the network device supports repeated transmission of the feedback information for the random access message Msg4.

20. The method according to any one of claims 13 to 19, wherein the configuration information indicates that the first PRACH resource comprises a third PRACH resource and a fourth PRACH resource, the third PRACH resource indicates that a quantity of repeated transmissions of the feedback information for the random access message Msg4 is N, the fourth PRACH resource indicates that a quantity of repeated transmissions of the feedback information for the random access message Msg4 is M, and M and N are not equal and are both integers greater than or equal to 1.

21. The method according to claim 20, wherein the configuration information indicates a sequence number of an RO corresponding to the third PRACH resource or a sequence number of a preamble corresponding to the third PRACH resource, and a sequence number of an RO corresponding to the fourth PRACH resource or a sequence number of a preamble corresponding to the fourth PRACH resource.

22. The method according to claim 21, wherein that the configuration information indicates the sequence number of the RO corresponding to the third PRACH resource or the sequence number of the preamble corresponding to the third PRACH resource, and the sequence number of the RO corresponding to the fourth PRACH resource or the sequence number of the preamble corresponding to the fourth PRACH resource comprises:
the configuration information indicates a start sequence number of the RO and a quantity of ROs corresponding to the third PRACH resource or a start sequence number of the preamble and a quantity of preambles corresponding to the third PRACH resource, and a start sequence number of the RO and a quantity of ROs corresponding to the fourth PRACH resource or a start sequence number of the preamble and a quantity of preambles corresponding to the fourth PRACH resource.

23. The method according to any one of claims 13 to 22, wherein the configuration information indicates that the network device supports N repeated transmissions of the feedback information for the random access message Msg4, and the configuration information indicates that the network device supports M repeated transmissions of the feedback information for the random access message Msg4.

24. The method according to any one of claims 13 to 23, wherein the first PRACH resource further indicates to repeatedly transmit a random access message Msg3.

25. A communication apparatus, wherein the communication apparatus comprises a processor, and when the processor executes a computer program in a memory, the method according to any one of claims 1 to 12 is performed, or the method according to any one of claims 13 to 24 is performed.

26. A computer-readable storage medium, wherein the computer-readable storage medium stores a computer program, and when the computer program is run on a communication apparatus, the method according to any one of claims 1 to 12 is performed, or the method according to any one of claims 13 to 24 is performed.

FIG. 1

FIG. 2

Terminal device

Network device

301: Configuration information, where the configuration information indicates a first physical random access channel (PRACH) resource that indicates a request for repeated transmission of feedback information for a random access message Msg4

302: Random access message Msg1, where the random access message Msg1 is carried on the first PRACH resource

303: Feedback information for the random access message Msg4

FIG. 3

RO — 64 preambles

SSB0

SSB1

SSB2

SSB3

16 preambles    16 preambles    16 preambles    16 preambles

8 preambles    8 preambles

First preamble group    Second preamble group

FIG. 4

SSB

RO1   RO2      RO3   RO4

First RO group          Second RO group

FIG. 5

Frequency
domain

SSB-RO association period

| RO2 SSB2/3 | RO4 SSB6/7 | RO6 | RO8 | RO10 | RO12 |
| RO1 SSB0/1 | RO3 SSB4/5 | RO5 | RO7 | RO9 | RO11 |

Time domain

FIG. 6A

Frequency
domain

SSB-RO association period

| RO2 SSB2/3 | RO4 SSB6/7 | RO6 SSB2/3 | RO8 SSB6/7 | RO10 SSB2/3 | RO12 SSB6/7 |
| RO1 SSB0/1 | RO3 SSB4/5 | RO5 SSB0/1 | RO7 SSB4/5 | RO9 SSB0/1 | RO11 SSB4/5 |

Time domain

FIG. 6B

First RO
group

Second RO
group

RO1 —— 64 preambles

RO2 —— 64 preambles

SSB0    SSB1

SSB0    SSB1

32 preambles    32 preambles

32 preambles    32 preambles

First PRACH
resource

Second PRACH
resource

FIG. 7

RO1    RO2    RO3    RO4    RO5

Resource 1 (repeated transmission of Msg3)

Resource 2 (repeated transmission of Msg3, small data (small data))

Resource 3 (reduced capability (RedCap))

FIG. 8

Receiving unit — 901

Sending unit — 902

Communication apparatus

**FIG. 9**

Communication apparatus 1000

1001

Processor — 1003

Instructions

1002

Memory — 1004

Instructions

1005

Transceiver

1006

Antenna

**FIG. 10**

1103

Memory

1101

Processor

Chip

1102

Interface

**FIG. 11**

## INTERNATIONAL SEARCH REPORT

| International application No. |
|---|
| **PCT/CN2024/076846** |

**A. CLASSIFICATION OF SUBJECT MATTER**

H04W 74/08(2024.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: Msg4, 消息4, 反馈, feedback, ACK, NACK, 重传, 重复传输, retx, retransmi+, 配置, configur+, 资源, resource, PRACH, Msg1

**C. DOCUMENTS CONSIDERED TO BE RELEVANT**

| Category* | Citation of document, with indication, where appropriate, of the relevant passages | Relevant to claim No. |
|---|---|---|
| X | CN 113891394 A (HUAWEI TECHNOLOGIES CO., LTD.) 04 January 2022 (2022-01-04) claims 1-22, and description, paragraphs 107-161, 169-191 and 267-274 | 1-26 |
| A | CN 115175143 A (HUAWEI TECHNOLOGIES CO., LTD.) 11 October 2022 (2022-10-11) entire document | 1-26 |
| A | US 2022377799 A1 (SAMSUNG ELECTRONICS CO., LTD.) 24 November 2022 (2022-11-24) entire document | 1-26 |
| A | QUALCOMM INC. "FL summary #2 for maintenance on HD-FDD for RedCap" *3GPP TSG-RAN WG1 Meeting #109-e, R1-2205442*, 20 May 2022 (2022-05-20), entire document | 1-26 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **12 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076846**

| Patent document cited in search report | | | Publication date (day/month/year) | Patent family member(s) | | | Publication date (day/month/year) |
|---|---|---|---|---|---|---|---|
| CN | 113891394 | A | 04 January 2022 | WO | 2022002165 | A1 | 06 January 2022 |
| | | | | EP | 4171110 | A1 | 26 April 2023 |
| | | | | US | 2023134484 | A1 | 04 May 2023 |
| | | | | VN | 94957 | A | 25 May 2023 |
| CN | 115175143 | A | 11 October 2022 | WO | 2022194151 | A1 | 22 September 2022 |
| US | 2022377799 | A1 | 24 November 2022 | EP | 4302562 | A1 | 10 January 2024 |
| | | | | WO | 2022235033 | A1 | 10 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310152019